# EUROPÄISCHE PATENTANMELDUNG

(11) **EP 2 722 144 A1**
(43) Veröffentlichungstag der Anmeldung: **23.04.2014**
(21) Anmeldenummer: 12189158.4
(22) Anmeldetag: 19.10.2012
(51) Int. Cl.: B29B 7/74, C08J 9/00, C08J 9/12, C08K 3/36, C08G 18/08

(54) **Reaktionssystem zur Herstellung von PUR- und PIR Hartschaumstoffen enthaltend Schichtsilikate**

(71) Anmelder: Bayer MaterialScience AG, 51373 Leverkusen (DE)
(72) Erfinder: Lindner, Stefan, 51368 Leverkusen (DE); Friederichs, Wolfgang, 51368 Leverkusen (DE); Strey, Reinhard, 41540 Dormagen (DE); Sottmann, Thomas, 50823 Köln (DE); Engelen, Diana, 51379 Leverkusen (DE)
(74) Vertreter: BIP Patents

(57) **Zusammenfassung**

Die Erfindung betrifft ein Reaktionssystem zur Herstellung von PUR- und PIR-Hartschaumstoffen, umfassend die folgenden Komponenten:
A) eine gegenüber Isocyanaten reaktive Verbindung;
B1) eine Tensidkomponente;
C) ein Treibmittel im überkritischen oder nahekritischen Zustand;
D) ein Polyisocyanat; und
E) ein Schichtsilikat.

Die Erfindung betrifft ferner ein Reaktionssystem zur Herstellung von PUR- und PIR-Hartschaumstoffen, umfassend die folgenden Komponenten:
B2) eine Tensidkomponente mit gegenüber Isocyanaten reaktiven funktionellen Gruppen;
C) ein Treibmittel im überkritischen oder nahekritischen Zustand;
D) ein Polyisocyanat; und
E) ein Schichtsilikat.

Weitere Gegenstände der Erfindung sind ein Verfahren zur Herstellung von PUR- und PIR-Hartschaumstoffen sowie PUR- und PIR-Hartschaumstoffe, die aus den vorgenannten Reaktionssystemen erhältlich sind.

## Beschreibung

Die vorliegende Erfindung betrifft ein Reaktionssystem zur Herstellung von PUR- und PIR-Hartschaumstoffen, ein Verfahren zur Erzeugung von PUR- und PIR-Hartschaumstoffen aus einem solchen Reaktionssystem sowie PUR- und PIR-Hartschaumstoffe, die aus einem solchen Reaktionssystem herstellbar sind.

Nanozelluläre oder nanoporöse Polymerschaumstoffe sind aufgrund von theoretischen Betrachtungen besonders gute Materialien für die Wärmeisolation. Hierbei liegen die inneren Abmessungen der Schaumstrukturen im Bereich der mittleren freien Weglänge eines Gasmoleküls. Auf diese Weise kann der Anteil des Gases am Wärmetransport verringert werden. Eine häufig in der Wärmedämmung verwendete Polymergruppe sind Polyurethane.

Bei der Herstellung von Polyurethanschäumen wird eine Polyolkomponente, in welcher auch ein Treibmittel enthalten ist, mit einem Isocyanat zur Reaktion gebracht. Durch die Reaktion von Isocyanat mit Wasser entsteht Kohlendioxid, das auch als Treibmittel wirkt.

Der für die Schaumbildung und damit für die spätere Zellgröße des ausgehärteten Schaums entscheidende Schritt ist die Nukleierung von Treibmitteln, da jede Zelle im Schaum aus einer Gasblase entstanden ist. Hierbei ist häufig zu beobachten, dass in der Regel nach der Nukleierung keine neuen Gasblasen entstehen, sondern Treibmittel in bereits bestehende Gasblasen hineindiffundiert.

Die Zugabe von Stabilisatoren unterstützt die Emulgierung der verschiedenen Komponenten, beeinflusst die Nukleierung und verhindert die Koaleszenz der wachsenden Gasblasen. Außerdem beeinflussen sie die Zellöffnung. Bei offenzelligen Schäumen werden die Membranen der wachsenden Poren geöffnet und die Stege der Poren bleiben bestehen.

Ein möglicher Ansatz ist es, ein überkritisches Treibmittel in der Reaktionsmischung zu emulgieren und dann nach einer Druckerniedrigung den Schaum auszuhärten. Als Variante davon ist das POSME-Verfahren (principle of supercritical micro-emulsion expansion) bekannt. In diesem liegt das Treibmittel in Form einer Mikroemulsion vor. Mikroemulsionen bilden sich unter bestimmten Bedingungen, welche unter anderem von der Konzentration der Emulgatoren und der Temperatur abhängen. Mikroemulsionen zeichnen sich dadurch aus, dass sie stabil sind und dass die unpolare Phase, also hier das Treibmittel, in sehr kleinen Tröpfchen innerhalb der polaren Phase vorliegen kann. Die Durchmesser solcher Tröpfchen können in einem Bereich von 1 bis 100 Nanometern liegen.

Die schlagartige Entspannung CO₂-haltiger Reaktionsmischungen wird in WO 2001/98389 A1 beschrieben. Diese Patentanmeldung betrifft ein Verfahren zur Herstellung von Polyurethan-Blockschaum, wobei eine Kohlendioxid enthaltende Polyurethan-Reaktivmischung plötzlich von einem Druck oberhalb des Gleichgewichtslösungsdruckes des Kohlendioxids auf Normaldruck entspannt wird. Die flüssige Polyurethan-Reaktivmischung wird unter Freisetzung von gelöstem Kohlendioxid aufschäumt, die aufgeschäumte Mischung wird auf ein Substrat aufgebracht und anschließend zum Blockschaum ausgehärtet. Das Kohlendioxid wird zunächst bei einem wesentlich oberhalb des Gleichgewichtslösungsdruckes liegenden Druck in der Reaktivmischung oder mindestens einer der Komponenten Polyol und Isocyanat vollständig gelöst. Anschließend wird der Druck auf einen Druck nahe des Gleichgewichtslösungsdruckes herabgesetzt, wobei zwischenzeitlich der Gleichgewichtslösungsdruck unter Freisetzung geringer Mengen des Kohlendioxids unter Bildung einer Blasen-Mikrodispersion unterschritten wird, gegebenenfalls die Komponenten gemischt werden und die plötzliche Druckherabsetzung auf Normaldruck erfolgt, bevor das freigesetzte Kohlendioxid wieder vollständig aufgelöst wird. Nanozelluläre Schäume werden hingegen nicht beschrieben.

US 2004/0054022 A1 offenbart ein Herstellungsverfahren für Polyurethan-Hartschaum mit einem mittleren Verhältnis von Längs- und Querschnittdurchmesser der Zellen von 1,0 bis 1,4 und einer Dichte von 20 bis 40 kg/m³. Aus der Reaktion von Wasser und Polyisocyanaten erzeugtes CO₂ sowie überkritisches, unterkritisches oder flüssiges CO₂ wird als Treibmittel eingesetzt. Vor dem Vermischen mit dem Polyisocyanat wird Wasser und besagtes CO₂ im flüssigen Zustand dem Polyol beigefügt. Bevorzugte Gehalte für den CO₂-Anteil liegen zwischen 0,5% und 3%.

DE10032334A1 beschreibt Schaumstoffe auf Basis Polyisocyanat-Polyadditionsprodukten, die Schichtsilikate enthalten. Die Verwendung von CO₂ als physikalisches Treibmittel ist nicht beschrieben.

EP1626063B1 beschreibt Mischungen enthaltend Schichtsilikate, in die mindestens eine Verbindung interkaliert ist, die keine gegenüber Isocyanat reaktiven Wasserstoffgruppen aufweist, und Polyetherpolyole mit einem Molekulargewicht von größer als 2000 g/mol. Mit dieser Mischung können auch Polyurethanschäume hergestellt werden, die Verwendung von CO₂ als physikalisches Treibmittel ist nicht beschrieben. Es wird außerdem beschrieben, dass sich die in DE10032334A1 beschriebenen Füllstoffe (z.B. Cloisit® 30A, Dihydroxyfettsäure aufgeweitetes Schichtsilikat) sehr schnell absetzen, was eine geringe Lagerstabilität zur Folge hat.

EP1209189A1 beschreibt Polymerschäume die bis zu 10% Nanoclay enthalten. Die Verwendung von CO₂ als physikalisches Treibmittel ist nicht beschrieben.

Die zum Teil im Stand der Technik eingesetzten fluor- und silikonhaltigen Tenside zur Stabilisierung von überkritischem CO₂ in einer Emulsion sind vergleichsweise teuer. Die vorliegende Erfindung hat sich daher die Aufgabe gestellt, ein Reaktionssystem zur Erzeugung eines Polyurethanschaums mit verbesserten Isolationseigenschaften anzugeben. Erfindungsgemäß wird diese Aufgabe gelöst durch ein Reaktionssystem zur Herstellung von PUR- und PIR-Hartschaumstoffen, umfassend die folgenden Komponenten:
A) eine gegenüber Isocyanaten reaktive Verbindung;
B1) eine Tensidkomponente;
C) ein Treibmittel im überkritischen oder nahekritischen Zustand;
D) ein Polyisocyanat; und
E) ein Schichtsilikat.

Die Aufgabe wird ferner gelöst durch ein Reaktionssystem zur Herstellung von PUR- und PIR-Hartschaumstoffen, umfassend die folgenden Komponenten:
B2) eine Tensidkomponente mit gegenüber Isocyanaten reaktiven funktionellen Gruppen;
C) ein Treibmittel im überkritischen oder nahekritischen Zustand;
D) ein Polyisocyanat; und
E) ein Schichtsilikat.

Dieses Reaktionssystem kann weiterhin A) eine gegenüber Isocyanaten reaktive Verbindung umfassen.

Die beiden Reaktionssysteme unterscheiden sich also darin, dass im Vergleich zu der Tensidkomponente B1) die Tensidkomponente B2) gegenüber Isocyanaten reaktive funktionelle Gruppen besitzt. Im Folgenden werden beide Tensidkomponente B1) und B2) gemeinsam als B) bezeichnet, sofern keine besondere Differenzierung erforderlich ist.

Es liegt ebenfalls im Rahmen der vorliegenden Erfindung, dass die Tensidkomponente B) eine Tensidmischung aus den Tensiden B1) und B2) umfasst.

Es wurde überraschenderweise gefunden, dass sich durch die Kombination einer Tensidkomponente, eines Treibmittels im überkritischen oder nahekritischen Zustand sowie eines Schichtsilikats zu Polyurethanschäumen weiterverarbeitbare Emulsionen des Treibmittels in der Reaktionsmischung herstellen lassen. In der Emulsion liegt das Treibmittel fein verteilt in einer eigenen Phase vor. Eine besonders geeignete Emulsion ist die Mikroemulsion, da hier das Treibmittel sehr fein verteilt ist und die Mischung thermodynamisch stabil ist. Die Schichtsilikate stabilisieren die Emulsion, indem sie die Koaleszenz der Treibmitteltröpfchen und die Diffusion des CO₂ verringern, wodurch sich besonders feinzellige Schäume herstellen lassen. Bei der Verwendung der Treibmittelmischung im überkritischen oder nahekritischen Zustand ist kein Nukleierungsschritt nötig.

Als Schichtsilikate E) können die aus dem Stand der Technik bekannten Silikatstrukturen mit zweidimensionalen Schichten aus SiO₄-Tetraedern eingesetzt werden. Diese sind auch als Blatt- oder Phyllosilicate bekannt. Beispiele für geeignete Schichtsilikate sind Bentonit, Montmorillonit, Talk, Pyrophyllit, Serpentinit, Glimmer, Kaolinit, Muskovit oder Gemische davon. Die Schichtsilikate bestehen aus Schichten, die eine Dicke von 1 nm und eine Länge von 75-150 nm haben können.

Die Schichtsilikate E) liegen bevorzugt modifiziert vor. Die Modifizierung kann darin bestehen, dass zwischen den Schichten Verbindungen eingelagert, d.h. interkaliert, werden. Die Schichtsilikate können mit Säuren, Alkylammonium- oder Alkylphosphoniumverbindungen modifiziert werden. Bevorzugt werden Schichtsilikate eingesetzt, die mit Alkylammoniumverbindungen modifiziert sind. Diese Alkylammoniumverbindungen können durch die Alkoxylierung und Alkylierung von Talgaminen hergestellt werden, beispielsweise Methyl-diethanol-talgammoniumsalz, Diethanol-benzyltalgammoniumsalz. Geeignete Schichtsilikate sind beispielsweise unter den Markennamen Cloisite®, Nanomer® oder Nanofil® erhältlich. Die Schichtsilikate können in das Polyol oder in das Isocyanat eingebracht werden.

Der Anteil der Schichtsilikate E) in der Reaktionsmischung kann beispielsweise ≥ 0,1 Gewichts-% bis ≤ 5 Gewichts-% betragen.

In der Herstellung des Polyurethanschaums wird überkritisches oder nahekritisches Treibmittel C) verwendet. Im Rahmen der vorliegenden Erfindung liegen nahekritische Bedingungen dann vor, wenn die folgende Bedingung erfüllt ist: (Tc - T)/T ≤ 0,4 und/oder (pc - p)/p ≤ 0,4. Hierbei bedeuten T die im Verfahren herrschende Temperatur, Tc die kritische Temperatur des Treibmittels oder Treibmittelgemisches, p der im Verfahren herrschende Druck und pc der kritische Druck für das Treibmittel oder Treibmittelgemisch. Vorzugsweise liegen nahekritische Bedingungen vor, wenn gilt: (Tc - T)/T ≤ 0,3 und/oder (pc - p)/p ≤ 0,3 und besonders bevorzugt (Tc - T)/T ≤ 0,2 und/oder (pc - p)/p ≤ 0,2. Ohne auf eine Theorie festgelegt zu sein, wird angenommen, dass durch die Wahl von geeigneten Tensidkomponenten sich Emulsionen oder Mikroemulsionen des überkritischen oder nahekritischen Treibmittels in der Phase mit gegenüber Isocyanaten reaktiven Komponenten bilden.

Das Treibmittel kann vorzugsweise eine eigene Phase in der Reaktionsmischung bilden. Es können die dem Fachmann bekannten Treibmittel für Polyurethanschäume eingesetzt werden. Es kann beispielsweise überkritisches Kohlendioxid verwendet werden. Es ist möglich, dass das Kohlendioxid während der Reaktion zum Polyurethanschaum gebildet wird, beispielsweise durch die Reaktion von Isocyanaten mit Wasser oder mit Säuren. Beispiele für weitere Treibmittel sind lineare C1-C6-Kohlenwasserstoffe, verzweigte C4-C6-Kohlenwasserstoffe und cyclische C3-C6-Kohlenwasserstoffe, diese können teil- oder perfluoriert sein. Spezielle Beispiele für Treibmittel sind Methan, Ethan, Propan, n-Butan, iso-Butan, n-Pentan, iso-Pentan, Cyclopentan, iso-Hexan, und/oder Cyclohexan. Weitere Beispiele sind die teil- oder perfluorierten Derivate von Methan, Ethan, Propan, n-Butan, iso-Butan, n-Pentan, iso-Pentan, Cyclopentan, Hexan, iso-Hexan, 2,3-Dimethylbutan und/oder Cyclohexan. Vorzugsweise wird Kohlendioxid oder eine Treibmittelmischung mit wenigstens 30 Gewichts-%, bevorzugt wenigstens 50 Gewichts-% und besonders bevorzugt wenigstens 70 Gewichts-% Kohlendioxid verwendet.

Die Verwendung von CO₂ als Treibmittel hat viele Vorteile. So ist CO₂ nicht brennbar, kostengünstig und umweltfreundlich. Außerdem sind die überkritischen Bedingungen bei einem Druck von über 74 bar und einer Temperatur von über 31 °C in einem für eine kommerzielle Umsetzung akzeptablen Bereich.

Gemäß einer bevorzugten Ausgestaltung liegt das Treibmittel C) in einer Tröpfchengröße von 1 nm bis 100 nm vor. Die Tröpfchengröße kann auch ≥ 3 nm bis ≤ 30 nm betragen. Die Tröpfchengröße kann beispielsweise mittels dynamischer Lichtstreuung oder Neutronenkleinwinkelstreuung bestimmt werden und ist als Mittelwert der Tröpfchengrößen zu verstehen. Diese Tröpfchengröße liegen beispielsweise in Mikroemulsionen vor. Die vorstehend genannten Tröpfchengrößen sind vorteilhaft, da sie bei einer Weiterverarbeitung der Zusammensetzung zu Polymerschäumen eine kleine Zellgröße im erhaltenen Schaum bewirken.

In einer weiteren Ausführungsform umfasst das Treibmittel C) weiterhin eine hydrophobe Co-Komponente. Die Co-Komponente kann eine Verbindung oder ein Gemisch von verschiedenen Verbindungen sein. Beispiele sind langkettige Alkane, Aromaten, Polysiloxane ("Silikonöle") und langkettige organische Ether, Ester und Ketone. Die verwendeten Siloxane enthalten mindestens 3 Silicium-Atome und die aliphatischen und aromatischen Verbindungen mindestens 8 C-Atome.

Unter einer hydrophoben Co-Komponente wird vorliegend eine solche verstanden, deren Verteilungskoeffizient in einem *n*-Octanol/Wasser-System log Kow unter Standardbedingungen ≥ 2 beträgt, vorzugsweise > 4, und besonders bevorzugt > 5.

Die Co-Komponente ist von der Tensidkomponente verschieden. Sie wirkt nicht als Tensid, wobei eine eventuelle Wirkung als Entschäumer dennoch erfindungsgemäß mit eingeschlossen ist. Insbesondere kann diese Eigenschaft so definiert werden, dass bei nichtionischen Co-Komponenten ihr HLB-Wert < 1 und vorzugsweise 0 ist. Der HLB-Wert (hydrophilic-lipophilic-balance) beschreibt den hydrophilen und lipophilen Anteil von hauptsächlich nichtionischen Tensiden. Der HLB-Wert für nichtionische Tenside kann folgendermaßen berechnet werden: HLB = 20 · (1 - Mₕ/M), wobei Mₕ die Molmasse des hydrophoben Anteils eines Moleküls ist und M die Molmasse des gesamten Moleküls.

Weiterhin ist vorgesehen, dass die Co-Komponente in überkritischem CO₂ bei einem Druck von ≥ 150 bar löslich und in unterkritischem CO₂ bei einem Druck von ≤ 40 bar nicht löslich ist. Vorzugsweise ist sie in überkritischem CO₂ bei einem Druck von ≥ 140 bar löslich und in unterkritischem CO₂ bei einem Druck von ≤ 60 bar nicht löslich. Besonders bevorzugt ist sie in überkritischem CO₂ bei einem Druck von ≥ 120 bar löslich und in unterkritischem CO₂ bei einem Druck von ≤ 70 bar nicht löslich. "Löslich" und "nicht löslich" bedeutet hierbei, dass unter den erfindungsgemäß spezifizierten Gewichtsanteilen der Co-Komponente innerhalb der Treibmittelkomponente C) und insbesondere also innerhalb von CO₂ ein einphasiges oder zweiphasiges System erhalten würde.

Die hydrophobe Co-Komponente enthält bevorzugt keine reaktiven Gruppen für die Reaktivmischung, da dies zu einer verbesserten Löslichkeit in der Reaktivmischung führen kann.

Das Treibmittel wird vorzugsweise mit den Komponenten A), B) und E) vermischt und diese Mischung dann anschließend mit der Komponente D) umgesetzt. Der Anteil des Treibmittels in der Reaktionsmischung umfassend Komponenten A), B), C) und E) aber ohne D), kann beispielsweise > 3 Gewichts-% bis ≤ 60 Gewichts-% bezogen auf die Summe der Komponenten A), B), C) und E) betragen, bevorzugt > 5 Gewichts-% bis < 30 Gewichts-%.

Die Komponente D) ist ein Polyisocyanat, also ein Isocyanat mit einer NCO-Funktionalität von typischerweise 1,8 bis 4,0, vorzugsweise von ≥ 2. Das Reaktionssystem kann zu Polyurethan- oder aber auch Polyisocyanuratschäumen reagieren. Dieses Reaktionsgemisch kann direkt in einem Mischkopf erzeugt werden.

Beispiele solcher geeigneten Polyisocyanate sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4-und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe (polymeres MDI), 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C1 bis C6-Alkylgruppen. Bevorzugt ist hierbei ein Isocyanat aus der Diphenylmethandiisocyanatreihe.

Neben den vorstehend genannten Polyisocyanaten können anteilig auch modifizierte Diisocyanate mit Uretdion-, Isocyanurat-, Urethan-, Carbodiimid, Uretonimin, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat mit eingesetzt werden.

Es ist möglich, dass das Isocyanat ein Prepolymer ist, welches erhältlich ist durch Reaktion eines Isocyanats mit einer NCO-Funktionalität von insbesondere 1,8 bis 4,0, vorzugsweise von ≥ 2 und Polyolen mit einem Molekulargewicht von ≥ 62 g/mol bis ≤ 8000 g/mol und OH-Funktionalitäten von ≥ 1,5 bis ≤ 6.

Selbstverständlich können in der Herstellung des Polyurethanschaums noch weitere übliche Hilfs- und Zusatzstoffe wie Katalysatoren, Flammschutzmittel, Trennmittel, Füllstoffe und dergleichen eingesetzt werden.

Die Anzahl der NCO-Gruppen in der Polyisocyanatkomponente D) und die Anzahl der gegenüber Isocyanaten reaktiven Gruppen der Komponente A) und der Komponente B) können beispielsweise in einem Zahlenverhältnis von ≥ 50:100 bis ≤ 500:100 zueinander stehen. Diese Kenngröße kann auch in einem Bereich von ≥ 80:100 bis ≤ 330:100 oder aber auch von ≥ 100:100 bis ≤ 160:100 liegen.

Zur Erzeugung eines Schaums aus dem erfindungsgemäßen Reaktionssystem können beispielsweise in einem Druck-Mischkopf, insbesondere einem Hochdruck-Mischkopf, unter für das Treibmittel überkritischen oder nahekritischen Bedingungen alle Komponenten mit Ausnahme der Polyisocyanatkomponente vorgelegt und dann mit dem Polyisocyanat D) versetzt werden. Die Vermischung erfolgt dann im Druck-Mischkopf.

Geeignete Drücke für die Herstellung des Polyurethanschaums können beispielsweise im Bereich von ≥ 40 bar bis ≤ 300 bar liegen. Geeignete Temperaturen sind beispielsweise ≥ 10 °C bis ≤ 80 °C und vorzugsweise > 25 °C bis < 60 °C. Insbesondere bevorzugt sind Drücke und Temperaturen oberhalb des kritischen Punktes von CO₂, also ≥ 73,75 bar und ≥ 31 °C.

Als NCO-reaktive Verbindungen A) können insbesondere Polyole, Polyamine, Polyaminoalkohole und Polythiole zum Einsatz kommen.

Beispiele für Polyamine sind Ethylendiamin, 1,2- und 1,3-Diaminopropan, 1,4-Diaminobutan, 1,6-Diaminohexan, Isophorondiamin, ein Isomerengemisch von 2,2,4- und 2,4,4-Trimethylhexamethylendiamin, 2-Methylpentamethylendiamin, Diethylentriamin, 1,3- und 1,4-Xylylendiamin, α, α, α', α'-Tetramethyl-1,3- und -1,4-xylylendiamin und 4,4'-Diaminodicyclohexylmethan, Diethylmethylbenzoldiamin (DETDA), 4,4'-Diamino-3,3'-dichlordiphenylinethane (MOCA), Dimethylethylendiamin, 1,4-Bis(aminomethyl)cyclohexan, 4,4'-Diamino-3,3'-dimethyldicyclohexylmethan und 4,4'-Diamino-3,5-diethyl-3',5'-diisopropyldicyclohexylmethan. Weiterhin geeignet sind polymere Polyamine wie Polyoxyalkylenamine.

Beispiele für Aminoalkohole sind N-Aminoethylethanolamin, Ethanolamin, 3-Aminopropanol, Neopentanolamin und Diethanolamin.

Beispiele für Polythiole sind Di(2-mercaptoethyl)ether, Pentaerythritoltetrakisthioglycolat, Pentaerythritoltetrakis(3-mercaptopropionat) und 1,2-Bis((2-mercaptoethyl)thio)-3-mercaptopropan.

In bevorzugter Ausgestaltung des erfindungsgemäßen Reaktionssystems weist die Verbindung A) und/ oder die Verbindung B2) eine Funktionalität gegenüber Isocyanaten von 1,8 bis 6,0 auf, insbesondere von ≥ 2,0.

Die Polyole können beispielsweise ein zahlenmittleres Molekulargewicht Mn von ≥ 62 g/mol bis ≤ 8000 g/mol, bevorzugt von ≥ 90 g/mol bis ≤ 5000 g/mol und mehr bevorzugt von ≥ 92 g/mol bis ≤ 1000 g/mol aufweisen. Die OH-Zahl der Komponente A) gibt im Falle eines einzelnen zugesetzten Polyols dessen OH-Zahl an. Im Falle von Mischungen wird die mittlere OH-Zahl angegeben. Dieser Wert kann anhand von DIN 53240 bestimmt werden. Die durchschnittliche OH-Funktionalität der genannten Polyole ist zum Beispiel > 2, beispielsweise in einem Bereich von > 2 bis < 6, vorzugsweise von > 2,1 bis < 4 und mehr bevorzugt von ≥ 2,2 bis ≤ 3.

Verwendbare Polyetherpolyole sind beispielsweise Polytetramethylenglykolpolyether, wie sie durch Polymerisation von Tetrahydrofuran mittels kationischer Ringöffnung erhältlich sind.

Ebenfalls geeignete Polyetherpolyole sind Additionsprodukte von Styroloxid, Ethylenoxid, Propylenoxid, Butylenoxide und/oder Epichlorhydrins an di- oder polyfunktionelle Startermoleküle.

Geeignete Startermoleküle sind zum Beispiel Wasser, Ethylenglykol, Diethylenglykol, Butyldiglykol, Glycerin, Diethylenglykol, Trimethylolpropan, Propylenglykol, Pentaerythrit, Sorbit, Saccharose, Ethylendiamin, Toluoldiamin, Triethanolamin, 1,4-Butandiol, 1,6-Hexandiol sowie niedermolekulare, Hydroxylgruppen aufweisende Ester derartiger Polyole mit Dicarbonsäuren.

Geeignete Polyesterpolyole sind unter anderem Polykondensate aus Di- sowie weiterhin Tri-, und Tetraolen und Di- sowie weiterhin Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, Butandiol(1,3), Butandiol(1,4), Hexandiol(1,6) und Isomere, Neopentylglykol oder Hydroxypivalinsäureneopentylglykolester. Daneben können auch Polyole wie Trimethylolpropan, Glycerin, Erythrit, Pentaerythrit, Trimethylolbenzol oder Trishydroxyethylisocyanurat eingesetzt werden.

Als Polycarbonsäuren können beispielsweise Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, Bernsteinsäure, 2-Methylbernsteinsäure, 3,3-Diethylglutarsäure, 2,2-Dimethylbernsteinsäure, Dodekandisäure, Endomethylentetrahydrophthalsäure, Dimerfettsäure, Trimerfettsäure, Zitronensäure, oder Trimellithsäure eingesetzt werden. Als Säurequelle können auch die entsprechenden Anhydride verwendet werden.

Sofern die mittlere Funktionalität des zu veresternden Polyols ≥ 2 ist, können zusätzlich auch Monocarbonsäuren wie Benzoesäure und Hexancarbonsäure mit verwendet werden.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind unter anderem Caprolacton, Butyrolacton und Homologe.

Verwendbare Polycarbonatpolyole sind Hydroxylgruppen aufweisende Polycarbonate, zum Beispiel Polycarbonatdiole. Diese sind durch Reaktion von Kohlensäurederivaten, wie Diphenylcarbonat, Dimethylcarbonat oder Phosgen, mit Polyolen, bevorzugt Diolen, oder durch die Copolymerisation von Alkylenoxiden, wie zum Beispiel Propylenoxid, mit CO₂ erhältlich.

Beispiele derartiger Diole sind Ethylenglykol, 1,2- und 1,3-Propandiol, 1,3- und 1 ,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A und lactonmodifizierte Diole der vorstehend genannten Art.

Statt oder zusätzlich zu reinen Polycarbonatdiolen können auch Polyether-Polycarbonatdiole eingesetzt werden.

Verwendbare Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit ≥ 4 bis ≤ 6 Kohlenstoffatomen oder aromatische Dicarbonsäuren, die einzeln oder im Gemisch verwendet werden. Beispielhaft seien Korksäure, Azelainsäure, Decandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Als Derivate dieser Säuren können beispielsweise deren Anhydride sowie deren Ester und Halbester mit niedermolekularen, monofunktionellen Alkoholen mit ≥ 1 bis ≤ 4 Kohlenstoffatomen eingesetzt werden.

Als weitere Komponente zur Herstellung der Polyetheresterpolyole werden Polyetherpolyole eingesetzt, die man durch Alkoxylieren von Startermolekülen wie mehrwertigen Alkoholen erhält. Die Startermoleküle sind mindestens difunktionell, können aber gegebenenfalls auch Anteile höherfunktioneller insbesondere trifunktioneller Startermoleküle enthalten.

Startermoleküle sind zum Beispiel Diole mit zahlenmittleren Molekulargewichten Mn von vorzugsweise > 18 g/mol bis ≤ 400 g/mol oder von ≥ 62 g/mol bis ≤ 200 g/mol wie 1,2-Ethandiol, 1,3-Propandiol, 1,2-Propandiol, 1,4-Butandiol, 1,5-Pentendiol, 1,5-Pentandiol, Neopentylglykol, 1,6- Hexandiol, 1,7-Heptandiol, Octandiol-1,8, 1,10-Decandiol, 2-Methyl-1,3-propandiol, 2,2-Dimethyl-1,3-propandiol, 3-Methyl-1, 5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol.

Neben den Diolen können auch Polyole mit zahlenmittleren Funktionalitäten von ≥ 2 bis ≤ 8, oder von ≥ 3 bis ≤ 4 mitverwendet werden, zum Beispiel 1,1,1-Trimethylolpropan, Triethanolamin, Glycerin, Sorbitan und Pentaerythrit sowie auf Triolen oder Tetraolen gestartete Polyethylenoxidpolyole mit mittleren Molekulargewichten von vorzugsweise > 62 g/mol bis < 400 g/mol oder von ≥ 92 g/mol bis < 200 g/mol.

Polyetheresterpolyole können auch durch die Alkoxylierung von Reaktionsprodukten, die durch die Umsetzung von organischen Dicarbonsäuren und Diolen erhalten werden, hergestellt werden. Als Derivate dieser Säuren können beispielsweise deren Anhydride eingesetzt werden, wie zum Beispiel Phthalsäureanhydrid.

Polyacrylatpolyole können durch radikalische Polymerisation von Hydroxylgruppen aufweisenden, olefinisch ungesättigten Monomeren oder durch radikalische Copolymersation von Hydroxylgruppen aufweisenden, olefinisch ungesättigten Monomeren mit gegebenenfalls anderen olefinisch ungesättigten Monomeren erhalten werden. Beispiele hierfür sind Ethylacrylat, Butylacrylat, 2-Ethylhexylacrylat, Isobornylacrylat, Methylmethacrylat, Ethylmethacrylat, Butylmethacrylat, Cyclohexylmethacrylat, Isobornylmethacrylat, Styrol, Acrylsäure, Acrylnitril und/oder Methacrylnitril. Geeignete Hydroxylgruppen aufweisende, olefinisch ungesättigte Monomere sind insbesondere 2-Hydroxyethylacrylat, 2-Hydroxyethyl-methacrylat, das durch Anlagerung von Propylenoxid an Acrylsäure erhältliche Hydroxypropyl-acrylat-Isomerengemisch sowie das durch Anlagerung von Propylenoxid an Methacrylsäure erhältliche Hydroxypropyl-methacrylat-Isomerengemisch. Endständige Hydroxylgruppen können auch in geschützter Form vorliegen. Geeignete Radikalinitiatoren sind die aus der Gruppe der Azoverbindungen, wie zum Beispiel Azoisobutyronitril (AIBN), oder aus der Gruppe der Peroxide, wie beispielsweise Di-tert.-Butylperoxid.

Erfindungsgemäß umfasst die Tensidkomponente B), das heißt B1) und/ oder B2) einen hydrophilen und einen hydrophoben Teil. Die Tensidkomponente B) kann grundsätzlich anionische, kationische, amphotere und/ oder nichtionische Tenside umfassen. Bei Tensiden definiert der HLB-Wert (engl. Abk.: hydrophilic-lipophilic-balance) das Massenverhältnis des hydrophilen und lipophilen Anteils. Der HLB-Wert für nichtionische Tenside kann folgendermaßen berechnet werden: HLB = 20 · (1 - Mₕ/M), wobei Mₕ die Molmasse des hydrophoben Anteils eines Moleküls ist und M die Molmasse des gesamten Moleküls. Der HLB-Wert für eine gegenüber Isocyanaten reaktive Tensidkomponente B2) kann beispielsweise 4 bis 18 betragen, bevorzugt 8 bis 16, besonders bevorzugt 10 bis 15.

In einer Ausführungsform umfasst der hydrophobe Teil der Tensidkomponente B1) und/ oder B2) eine gesättigte oder ungesättigte Kohlenwasserstoffkette mit mindestens 4 C-Atomen, vorzugsweise mindestens 6 C-Atomen, bevorzugt mindestens 12 C-Atomen und besonders bevorzugt mindestens 14 C-Atomen. Gesättigte oder ungesättigte Kohlenwasserstoffketten der Tensidkomponente B) lassen sich beispielsweise durch die Alkoxylierung von Fettäurealkoholen oder Fettsäuren mit Ethylenoxid oder Propylenoxid herstellen.

Gesättigte Kohlenwasserstoffketten der Tensidkomponente B1) und/ oder B2) lassen sich beispielsweise auch durch Veresterung von Polyolen mit gesättigten Fettsäuren erhalten. Ein Beispiel für eine geeignete gesättigte Fettsäure ist 2-Ethylhexansäure. Ungesättigte Kohlenwasserstoffketten können neben Einheiten der Form -(H)C=C(H)- selbstverständlich auch gesättigte Einheiten -CH₂-enthalten. Dieses lässt sich durch Veresterung mit ungesättigten Fettsäuren erreichen. Ein Beispiel für eine geeignete ungesättigte Fettsäure ist Ölsäure ((*Z*)-9-0ctadecensäure) oder Rizinolsäure. Es können auch Mischungen aus Fettsäuren, die aus natürlichen Ölen wie beispielsweise Sojaöl oder Rapsöl erhalten werden, eingesetzt werden.

Der hydrophile Bereich der gegenüber Isocyanaten reaktiven Verbindung B2) umfasst vorzugsweise Ethylenoxideinheiten -[-CH₂-CH₂-O-]- und/oder Carbonsäureestereinheiten. Die Verbindung B2) lässt sich beispielsweise durch partielle Alkoxylierung eines mindestens trifunktionellen Polyols erhalten, so dass eine OH-Gruppe des Polyols für eine Veresterung mit einer Fettsäure zur Verfügung steht. Die Verbindung B2) lässt weiterhin beispielsweise durch eine Veresterung von Ölsäure mit Adipinsäure, Trimethylolpropan und/oder Diethylenglykol erhalten. Vorzugsweise hat die gegenüber Isocyanaten reaktive Verbindung B2) eine mittlere Anzahl von OH-Gruppen je Molekül von 1,0 bis 5, besonders bevorzugt 2,0 bis 3,5.

Der Anteil der eingeesterten Fettsäure in der Reaktionsmischung umfassend Komponenten A), B), C), D) und E), kann beispielsweise > 0,5 Gewichts-% bis ≤ 25 Gewichts-% betragen. Bevorzugte Anteile sind ≥ 2 Gewichts-% bis ≤ 15 Gewichts-%, besonders bevorzugt sind ≥ 4 Gewichts-% bis ≤ 10 Gewichts-%.

Geeignete Tenside B) unterliegen zunächst hinsichtlich ihrer Auswahl keinen Beschränkungen. Günstigerweise erlauben es die Tenside dem Treibmittel, in der gegenüber Isocyanaten reaktiven Phase Emulsionen oder Mikroemulsionen zu bilden. Besonders geeignete Tenside sind beispielsweise alkoxylierte Alkanole wie Ether von linearen oder verzweigten Alkanolen mit ≥ 6 bis ≤ 30 Kohlenstoffatomen mit Polyalkylenglykolen mit ≥ 5 bis ≤ 100 Alkylenoxideinheiten, alkoxylierte Alkylphenole, alkoxylierte Fettsäuren, Carbonsäureester eines alkoxylierten Sorbitans (insbesondere Polysorbat 80), Fettsäureester, Polyalkylenamine, Alkylsulfate, Phosphatidylinositole, fluorierte Tenside, Polysiloxangruppen umfassende Tenside wie Polysiloxan-Polyoxyalkylen-Copolymere und/oder Bis(2-ethyl-1-hexyl)sulfosuccinat. Beispiele für Tenside nach B1) sind Alkylsulfate oder Bis(2-ethyl-1-hexyl)sulfosuccinat. Beispiele für Tenside nach B2) sind alkoxylierte Alkanole, alkoxylierte Alkylphenole, alkoxylierte Fettsäuren, Fettsäureester die mit Diolen oder Triolen verestert sind.

Die Tensidkomponente B) ist vorzugsweise eine bei 20 °C flüssige Verbindung, bevorzugt mit einer Viskosität von kleiner als 15000 mPas, besonders bevorzugt kleiner 5000 mPas. Die Viskosität kann beispielsweise nach DIN 53019 bestimmt werden.

Die Tensidkomponente B) kann beispielsweise ein zahlenmittleres Molekulargewicht Mₙ von ≥ 100 g/mol bis ≤ 8000 g/mol, bevorzugt von ≥ 200 g/mol bis ≤ 5000 g/mol und mehr bevorzugt von ≥ 500 g/mol bis ≤ 2500 g/mol aufweisen.

Die Erfindung betrifft des Weiteren ein Verfahren zur Herstellung von PUR- und PIR-Hartschaumstoffen, bei dem man die Komponenten eines erfindungsgemäßen Reaktionssystems miteinander vermischt und reagieren lässt, wobei insbesondere zunächst eine Mischung aus sämtlichen Komponenten mit Ausnahme des Polyisocyanats D) in einem Druck-Mischkopf unter für das Treibmittel C) überkritischen oder nahekritischen Bedingungen erzeugt und diese Mischung dann mit dem Polyisocyanat D) versetzt wird. Das Austragen der Mischung aus dem Mischkopf erfolgt vorzugsweise unter Erniedrigung auf Atmosphärendruck oder darunter. Die Zugabe des Polyisocyanats D) erfolgt typischerweise im Mischkopf.

Unter Atmosphärendruck ist hierbei insbesondere ein Druck von ≥ 0,9 bar bis ≤ 1,1 bar zu verstehen. Hierbei geht das Treibmittel in den unterkritischen und vorzugsweise in den gasförmigen Zustand über. Beispielsweise kann das Reaktionsgemisch aus dem Mischkopf einfach in eine offene Form eingebracht werden oder kontinuierlich für die Herstellung von Platten, wie zum Beispiel durch Freischaumanlagen oder Doppeltransportanlagen, genutzt werden. Es ist erfindungsgemäß ausdrücklich mit eingeschlossen, dass zwischen dem Verlassen der Reaktionsgemisches aus dem Mischkopf und dem Entspannen auf Atmosphärendruck noch Zwischenstationen vorgesehen sind, in denen ein Druck herrscht, der zwischen dem Druck im Mischkopf und dem Atmosphärendruck liegt.

In einer Ausführungsform des erfindungsgemäßen Verfahrens herrscht nach dem Bereitstellen der Mischung der Verbindungen A), B), C), D) und E) insbesondere ein Druck von ≥ 40 bar bis ≤ 200 bar, vorzugsweise ein Druck von ≥ 60 bar bis ≤ 150 bar, besonders bevorzugt ein Druck von ≥ 70 bar bis 120 bar, ganz besonders bevorzugt ≥ 80 bar bis ≤ 120 bar. Dieser Zustand kann insbesondere in einem Mischkopf und nach einem Mischkopf herrschen. Bei solchen Drücken können überkritische oder nahekritische Bedingungen für das eingesetzte Treibmittel aufrecht erhalten werden.

In einer weiteren Ausführungsform des erfindungsgemäßen Verfahrens sind in dem Mischkopf oder stromabwärts vom Mischkopf Einrichtungen angeordnet, um den Strömungswiderstand beim Austragen der Mischung umfassend die Komponenten A), B), C), D) und E) zu erhöhen. Solche Einrichtungen können beispielsweise in Strömungsrichtung gesehen nach einer Mischkammer des Mischkopfs angeordnete Lochblenden, Gitter, Spaltgitter und/oder Siebe sein. Durch die Erhöhung des Strömungswiderstandes kann gezielt der Druck beeinflusst werden, den die Reaktionsmischung vor dem Austragen aus dem Mischkopf aufweist. Der so eingestellte Druck kann niedriger sein als der Druck beim Mischen der Komponenten der Reaktionsmischung. Auf diese Weise kann auf die Bildung und Expansion von Treibmitteltröpfchen oder Treibmittelbläschen Einfluss genommen werden. Solche Einrichtungen werden beispielsweise in WO 2001/98389 A1 beschrieben.

Ein weiterer Gegenstand der vorliegenden Erfindung betrifft einen Hartschaumstoff, erhältlich durch Vermischen und Umsetzen der Komponenten eines erfindungsgemäßen Reaktionssystems. Bei dem Hartschaumstoff handelt es sich um einen Polyurethanschaum und/ oder Polyisocyanuratschaum, der insbesondere eine Rohdichte von 20 kg/m³ bis 160 kg/m³ aufweist. Die Rohdichte kann gemäß DIN EN 1602 bestimmt werden und beträgt vorzugsweise 30 kg/m³ bis 120 kg/m³ und weiter bevorzugt 50 kg/m³ bis 80 kg/m³. Bevorzugte Verwendungen für den erfindungsgemäßen Schaum liegen in der Wärmeisolierung, beispielsweise für die Herstellung von Dämmplatten, Metallverbundpaneelen oder für Kühlschrankisolierungen.

Die Erfindung betrifft weiterhin die Verwendung eines Reaktionssystems umfassend die folgenden Komponenten zur Herstellung von PUR- und PIR-Hartschaumstoffen:
A) eine gegenüber Isocyanaten reaktive Verbindung;
B1) eine Tensidkomponente;
C) ein Treibmittel im überkritischen oder nahekritischen Zustand;
D) ein Polyisocyanat; und
E) ein Schichtsilikat.

Ein weiterer Gegenstand der vorliegenden Erfindung ist die Verwendung eines Reaktionssystems umfassend die folgenden Komponenten zur Herstellung von PUR- und PIR-Hartschaumstoffen:
B2) eine Tensidkomponente mit gegenüber Isocyanaten reaktiven funktionellen Gruppen;
C) ein Treibmittel im überkritischen oder nahekritischen Zustand;
D) ein Polyisocyanat; und
E) ein Schichtsilikat.

Dieses Reaktionssystem kann weiterhin A) eine gegenüber Isocyanaten reaktive Verbindung umfassen.

Als Beispiel für eine Rezeptur liegen die Komponenten A), B), C), D) und E) in den folgenden Mengen vor:
A) ≥ 0 Gewichts-% bis ≤ 45 Gewichts-%
B1) ≥ 1 Gewichts-% bis ≤ 45 Gewichts-%
C) ≥ 1 Gewichts-% bis ≤ 40 Gewichts-%
D) ≥ 30 Gewichts-% bis ≤ 70 Gewichts-%
E) ≥ 0,1 Gewichts-% bis ≤ 5 Gewichts-%
oder
A) ≥ 0 Gewichts-% bis ≤ 45 Gewichts-%
B2) ≥ 1 Gewichts-% bis ≤ 65 Gewichts-%
C) ≥ 1 Gewichts-% bis ≤ 40 Gewichts-%
D) ≥ 30 Gewichts-% bis ≤ 70 Gewichts-%
E) ≥ 0,1 Gewichts-% bis ≤ 5 Gewichts-%

Hierbei addieren sich die Angaben in Gewichts-% zu ≤ 100 Gewichts-%. Bevorzugte Mengen der Komponenten sind:
A) ≥ 20 Gewichts-% bis ≤ 40 Gewichts-%
B1 und/ oder B2) ≥ 5 Gewichts-% bis ≤ 40 Gewichts-%
C) ≥ 3 Gewichts-% bis ≤ 20 Gewichts-%
D) ≥ 40 Gewichts-% bis ≤ 60 Gewichts-%
E) ≥ 0,5 Gewichts-% bis ≤ 2 Gewichts-%

Die vorliegende Erfindung wird anhand der nachfolgenden Beispiele in Verbindung mit der Figur weiter erläutert, ohne jedoch darauf beschränkt zu sein.

### Eingesetzte Rohstoffe:

Desmophen® VP.PU 1431: bifunktionelles Polyetheresterpolyol, EO-Addukt an eine Mischung aus Phthalsäureanhydrid, Diethylenglycol und Ethylendiamin mit einer OH-Zahl von 275 bis 325 mg KOH/g und einer Viskosität von 6,5 +/- 1,3 Pa s bei 25 °C; Bayer MaterialScience AG.

Desmorapid® 726b: Katalysator der Firma Bayer MaterialScience AG

DBTDL: Dibutylzinndilaurat, Katalysator

Desmodur® VP.PU 22HK75: Desmodur VP.PU 22HK75, eine dunkelbraune, mittelviskose Flüssigkeit, ist ein teilweise modifiziertes Gemisch von Diphenylmethan-4,4'-diisocyanat (MDI) mit Isomeren und höherfunktionellen Homologen. Der NCO-Gehalts des Prepolymers beträgt 27,3 bis 28,3 Gew.-% und die Viskosität ist 0,8 bis 1,3 Pa·s bei 25 °C; Bayer MaterialScience AG.

Tensid1: Tensid auf Basis von Rizinolsäure, Adipinsäure, Trimethylolpropan und Diethylenglykol. Das Tensid wurde aus 649 g Adipinsäure, 377 g Rizinolsäure, 458 g Diethylenglykol, und 200 g Trimethylolpropan mit 20 ppm Zinn(II)chlorid-dihydrat hergestellt. Die Reaktion lief für 42 Stunden bei 200 °C im Vakuum, das entstehende Wasser wurde abdestilliert. Die gemessene OH-Zahl beträgt 152 mg KOH/g bei einer mittleren Funktionalität von 3 und einem HLB-Wert von 15. Es handelt sich also um eine Tensidkomponente B2). Die Viskosität ist 3,87 Pa s bei 25 °C.

Cloisite® 30B: Montmorillonit-Schichtsilikat, das mit einem quartären Ammoniumsalz modifiziert ist. Das quartäre Ammoniumsalz ist eine Methyl-,dihydroxyethyl-Talgammonium-Verbindung. Der Talgrest besteht aus einer Mischung von C18, C16 und C14-Ketten. Das quartäre Ammoniumsalz ist hydroxyfunktionalisiert. Produkt der Firma Southern Clay Products, Inc..

### Beispiele

### Mikroemulsion

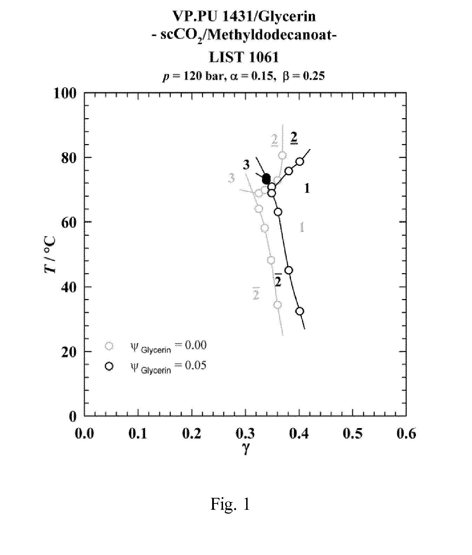

In den folgenden Beispielen und der Fig. 1 gibt der Wert α den relativen Gewichtsanteil des Treibmittels, also der unpolaren Phase, in der Polyol/Treibmittelmischung an. Der Wert β bezeichnet den relativen Gewichtsanteil der Co-Treibmittelkomponente (hier: Methyldodecanoat) in der Treibmittelmischung an. Der Wert Ψ bezeichnet die Massenbrüche der einzelnen Komponenten in der polaren Phase. Der Wert γ bezeichnet den relativen Gewichtsanteil der Tensidkomponente an der Gesamtzusammensetzung. In Fig. 1 bedeuten die Bezugszeichen 1 ein einphasiges Gebiet, in dem Mikroemulsionen auftreten und 2 ein zweiphasiges Gebiet, wobei sich das Tensid entweder in der polaren Phase oder in der unpolaren Phase befindet.

Die einzelnen Beispiele betreffen jeweils bestimmte Polyol/Treibmittel/Tensidsysteme. Innerhalb der Beispiele wurden Rezepturen mit unterschiedlichem Anteil Ψ von Glycerin näher charakterisiert. Bei jeweils konstantem Anteil α wurde der Anteil γ der Tensidkomponente verändert. Die Zusammensetzung der Tensidkomponente selber wurde in den jeweiligen Beispielen konstant gehalten. Die Temperatur des Systems wurde notiert und Verbindungslinien zwischen den Messpunkten interpoliert, um die Grenzen zwischen den ein-, zwei- und dreiphasigen Gebieten zu bestimmen. Auf diese Weise wurde ein Diagramm erhalten, welches einem Kahlweit-Fisch-Diagramm (M. Kahlweit, R. Strey, Angewandte Chemie International Edition, Band 28(8), Seite 654 (1985)) vergleichbar ist. Von besonderem Interesse für die Charakterisierung des Systems ist der Schnittpunkt der Verbindungslinien. Bei bekannter Lage des Schnittpunkts im Koordinatensystem von γ und T kann man bei einem geringfügig größeren Tensidanteil γ eine EmulsionMikroemulsion erwarten.

### Lagerstabilität:

Zur Überprüfung der Lagerstabilität wurden das Schichtsilikat Cloisite 30B mit einem Schnellrührer in die Polyolmischungen eingebracht.

**Tabelle 1**

| **Komponenten** | **Beispiel 1** | **Vergleich 1** |
|---|---|---|
| VP.PU 1431 | 27,90 | 27,90 |
| Glyzerin | 1,47 | 1,47 |
| Tensid1 | 34,54 | |
| Cloisite 30B | 1,35 | 0,62 |

Die Formulierung aus Beispiel 1 enthält ein Tensid mit einem Fettsäurerest als hydrophobe Gruppe. Aus der Formulierung des Beispiels 1 ist bei der Zugabe der Zugabe von CO₂ eine Mikroemulsion erhältlich. Die Mischung aus Beispiel 1 bildet eine stabile Mischung. Auch nach mehr als 4 Wochen ist mit bloßen Auge keine Entmischung erkennbar.

Die Formulierung aus dem Vergleich 1 wird analog zu Beispiel 1 hergestellt. Trotz der deutlich höheren Viskosität der Formulierung aus Vergleich 1 ist der optische Eindruck bereits nach 3 Tagen deutlich schlechter. Man sieht erste ausgefallene Schichtsilikate, die sich an der Gefäßwand absetzen.

Mit der Polyolformulierung aus Beispiel 1 lassen sich somit lagerstabile Polyol-Schichtsilikat-Mischungen herstellen.

### Beispiele 2 und 3 sowie Vergleichsbeispiele Vergleich 2 bis Vergleich 3:

Gemäß der in den nachfolgenden Tabellen 2 aufgeführten Rezepturen wurden CO₂-getriebene Polyurethanschäume hergestellt. Wenn nicht anders vermerkt, sind Mengenangaben als Gewichtsteile zu verstehen. Die Mischung aus der gegenüber Isocyanaten reaktiven Verbindung A), der Tensidkomponente B) und der Schichtsilikate E) wurde mit Zusatzkomponenten wie Katalysatoren und Methyllaurat mit einem Schnellrührer bei 800 Umdrehungen pro Minute für 20 Minuten gemischt. Man erhält eine lagerstabile Mischung, bei den die Schichtsilikate gleichmäßig fein verteilt sind. Diese Mischung wurde in einer Standard-Hochdruckmischanlage als Polyolkomponente eingesetzt und bei einem Anfangsdruck von 120 bar mit dem CO₂ als Treibmittel C) vermischt. Hierbei herrschten für das Treibmittel überkritische Bedingungen. In einem Hochdruckmischkopf wurde diese mit einem Polyisocyanat D), das mit einem Anfangsdruck von 120 bar gefördert wird, vermischt. Die Schussmenge beträgt 60 g/s und die Schußzeit 10 Sekunden. Das Auslaufrohr des Mischkopfes hatte einen Innendurchmesser von 8,5 mm und eine Länge von ca. 50 cm.

In den Beispielen 2 und 3 und den Vergleichsbeispielen 2 und 3 war im Auslaufrohr nach dem Mischkopf eine Lochblende mit einer in den Tabellen angegebenen Lochgröße angeordnet. Auf diese Weise konnte der Druck im Mischkopf gezielt eingestellt werden und eine langsamere Druckabsenkung in der Reaktionsmischung erreicht werden. Durch die Lochblende kann der Druck gezielt eingestellt werden. Die Vergleichsbeispiele 2-3, bei denen im Gegensatz zu den Beispielen 2 und 3 das Schichtsilikat E weggelassen wurde, haben eine deutlich höhere Rohdichte und die Vergleichsbeispiele 2 bis 3 sind dazu noch grobzellig.

Es wurden die in der folgenden Tabelle aufgeführten Reaktionssysteme und daraus Hartschäume erzeugt:

**Tabelle 2**

| **Komponenten** | **Beispiel 2** | **Beispiel 3** | **Vergleich 2** | **Vergleich 3** |
|---|---|---|---|---|
| VP.PU 1431 | 29,01 | 27,93 | 29,35 | 28,25 |
| Glyzerin | 1,53 | 1,47 | 1,54 | 1,49 |
| Tensid1 | 35,91 | 34,58 | 36,33 | 34,97 |
| Desmorapid 726b | 0,46 | 0,44 | 0,46 | 0,45 |
| DBTDL | 0,09 | 0,09 | 0,09 | 0,09 |
| Cloisite 30B | 1,4 | 1,35 | 0 | 0 |
| Methyllaurat | 1,07 | 1,03 | 1,08 | 1,04 |
| CO₂ | 4,31 | 4,15 | 4,36 | 4,19 |
| VP.PU 22HK75 | 46,23 | 48,97 | 46,78 | 49,52 |
| | | | | |

| **Prozessparam eter** | | | | |
|---|---|---|---|---|
| Verhältnis NCO/OH | 1,0 | 1,1 | 1,0 | 1,1 |
| Isocyanattempe ratur [°C] | 27 | 27 | 28 | 28 |
| Polyoltemperat ur [°C] | 29 | 29 | 30 | 30 |
| Druck in der Mischkammer [bar] | 72-68 | 70-67 | 63-69 | 67-71 |
| Lochblende [mm] | 0,9 | 0,9 | 0,9 | 0,9 |
| Rohrdurchmes ser [mm] | 8,5 | 8,5 | 8,5 | 8,5 |
| | | | | |

| **Eigenschaften PUR-Schaum** | | | | |
|---|---|---|---|---|
| Freie Dichte Kern [kg/m³] | 102 | 89 | 115 | 114 |
| Kommentar | feinzellig | feinzellig | grobzellig mit Lunkern | grobzellig mit Lunkern |
| | | | | |

| **Emulsionspar ameter** | | | | |
|---|---|---|---|---|
| γ-Wert CO₂-Polyol-Emulsion | 0,5 | 0,5 | 0,5 | 0,5 |
| Gewichtsanteil CO₂ [%] | 3,6 | 3,5 | 3,6 | 3,5 |
| Gewichtsanteil der Fettsäure [%] | 7,5 | 7,2 | 7,6 | 7,3 |
| Gewichtsanteil Tensid1 [%] | 29,9 | 28,8 | 30,3 | 29,1 |
| Gewichtsanteil e Cloisite 30B [%] | 1,2 | 1,1 | 0,0 | 0,0 |

Die in Tabelle 2 zusammengefassten Ergebnisse belegen, dass die erfindungsgemäßen Reaktionssysteme neben einer verbesserten Lagerstabilität zu sehr feinzelligen Schäumen führen, die infolgedessen auch bessere Wärmeisolationseigenschaften besitzen. Zudem zeichnen sich die erfindungsgemäßen Schäume durch eine geringe Dichte aus.

## Patentansprüche

1. Reaktionssystem zur Herstellung von PUR- und PIR-Hartschaumstoffen, umfassend die folgenden Komponenten:
A) eine gegenüber Isocyanaten reaktive Verbindung;
B1) eine Tensidkomponente;
C) ein Treibmittel im überkritischen oder nahekritischen Zustand;
D) ein Polyisocyanat; und
E) ein Schichtsilikat.

2. Reaktionssystem zur Herstellung von PUR- und PIR-Hartschaumstoffen, umfassend die folgenden Komponenten:
B2) eine Tensidkomponente mit gegenüber Isocyanaten reaktiven funktionellen Gruppen;
C) ein Treibmittel im überkritischen oder nahekritischen Zustand;
D) ein Polyisocyanat; und
E) ein Schichtsilikat.

3. Reaktionssystem nach Anspruch 1, **dadurch gekennzeichnet, dass** das Reaktionssystem weiterhin umfasst:
B2) eine Tensidkomponente mit gegenüber Isocyanaten reaktiven funktionellen Gruppen.

4. Reaktionssystem nach Anspruch 2, **dadurch gekennzeichnet, dass** das Reaktionssystem weiterhin umfasst:
A) eine gegenüber Isocyanaten reaktive Verbindung.

5. Reaktionssystem nach einem der vorstehenden Ansprüche, **dadurch gekennzeichnet, dass** das Reaktionssystem bezogen auf das Reaktionssystem 1 bis 65 Gew.-% der Tensidkomponente B1) und/ oder B2) umfasst, insbesondere 2 bis 45 Gew.-%, bevorzugt 5 bis 30 Gew.-%.

6. Reaktionssystem nach einem der vorstehenden Ansprüche, **dadurch gekennzeichnet, dass** die Tensidkomponente B1) und/ oder B2) ausgewählt ist aus nichtionischen Tensiden, wobei vorzugsweise der HLB- Wert 4 bis 18 beträgt gemäß der Gleichung HLB = 20 * (1 - Mₕ/M) mit Mₕ = Molmasse des hydrophoben Anteils und M = Gesamtmasse des nichtionischen Tensids, weiter bevorzugt von 8 bis 16.

7. Reaktionssystem nach einem der vorstehenden Ansprüche, **dadurch gekennzeichnet, dass** die Verbindung A) und/ oder die Verbindung B2) eine Funktionalität gegenüber Isocyanaten von 1,8 bis 6,0 aufweist, insbesondere ≥ 2,0.

8. Reaktionssystem nach einem der vorstehenden Ansprüche, **dadurch gekennzeichnet, dass** das Treibmittel C) ausgewählt aus der Gruppe umfassend lineare, verzweigte oder cyclische C1- bis C6-Kohlenwasserstoffe, lineare, verzweigte oder cyclische C1- bis C6-Fluorkohlenwasserstoffe, N₂, O₂, Argon und/oder CO₂ und bevorzugt aus einer Mischung aus CO₂ und zumindest einem weiteren der genannten Treibmittel besteht, wobei der Anteil von CO₂ an der Treibmittelmischung vorzugsweise wenigstens 30 Gew.-% beträgt, weiter bevorzugt wenigstens 50 Gew.-%, besonders bevorzugt wenigstens 70 Gew.-%.

9. Reaktionssystem nach einem der vorstehenden Ansprüche, **dadurch gekennzeichnet, dass** das Treibmittel C) in dem Reaktionssystem in Form von Tröpfchen vorliegt, wobei die Tröpfchengröße 1 nm bis 100 nm beträgt.

10. Reaktionssystem nach einem der vorstehenden Ansprüche, **dadurch gekennzeichnet, dass** das Treibmittel C) weiterhin eine hydrophobe Co-Komponente umfasst, die vorzugsweise ausgewählt ist aus der Gruppe umfassend langkettige Alkane mit wenigstens 8 C-Atomen, Aromaten mit wenigstens 8 C-Atomen, Polysiloxane ("Silikonöle") mit wenigstens 3 Si-Atomen und langkettige organische Ether C-Atomen, Ester und Ketone mit wenigstens 8.

11. Reaktionssystem nach einem der vorstehenden Ansprüche, **dadurch gekennzeichnet, dass** die Verbindung B2) eine mittlere Anzahl von 1,0 bis 5 OH-Gruppen je Molekül aufweist, bevorzugt 2,0 bis 3,5, wobei insbesondere wenigstens eine der OH-Gruppen mit einer Fettsäure verestert ist und wobei weiter bevorzugt der Anteil an eingeesterter Fettsäure > 0,5 Gewichts-% ≤ 25 Gewichts-% bezogen auf die Reaktionsmischung umfassend die Komponenten A), B1 und/ oder B2), C), D) und E) beträgt, bevorzugt ≥ 2 Gewichts-% bis < 15 Gewichts-%, besonders bevorzugt ≥ 4 Gewichts-% bis ≤ 10 Gewichts-%.

12. Verfahren zur Herstellung von PUR- und PIR-Hartschaumstoffen, bei dem man die Komponenten eines Reaktionssystems nach einem der Ansprüche 1 bis 11 miteinander vermischt und reagieren lässt, wobei insbesondere zunächst eine Mischung aus sämtlichen Komponenten mit Ausnahme des Polyisocyanats D) in einem Druck-Mischkopf unter für das Treibmittel C) überkritischen oder nahekritischen Bedingungen erzeugt und diese Mischung dann mit dem Polyisocyanat D) versetzt wird und Austragen aus dem Druck-Mischkopf unter Erniedrigung auf Atmosphärendruck oder darunter, die Umsetzung der Komponenten des Reaktionssystems insbesondere bei einem Druck von 40 bis 300 bar und/ oder einer Temperatur von 10 bis 80 °C durchgeführt wird, wobei vorzugsweise bei einem Treibmittel, welches CO₂ enthält oder daraus besteht ein Druck von wenigstens 73,75 bar und eine Temperatur von wenigstens 31 °C eingestellt werden.

13. Hartschaumstoff zur Verwendungen als Wärmeisolierung, insbesondere für die Herstellung von Dämmplatten, Metallverbundpaneelen oder für Kühlschrankisolierungen, erhältlich durch Vermischen und Umsetzen der Komponenten eines Reaktionssystems nach einem der Ansprüche 1 bis 11, wobei der Hartschaumstoff insbesondere ein Polyurethanschaum und/ oder der Polyisocyanuratschaum ist, der vorzugsweise eine Rohdichte gemäß DIN EN 1602 von 20 kg/m³ bis 160 kg/m³ aufweist.

14. Verwendung eines Reaktionssystems umfassend die folgenden Komponenten zur Herstellung von PUR- und PIR-Hartschaumstoffen:
A) eine gegenüber Isocyanaten reaktive Verbindung;
B1) eine Tensidkomponente;
C) ein Treibmittel im überkritischen oder nahekritischen Zustand;
D) ein Polyisocyanat; und
E) ein Schichtsilikat.

15. Verwendung eines Reaktionssystems umfassend die folgenden Komponenten zur Herstellung von PUR- und PIR-Hartschaumstoffen:
B2) eine Tensidkomponente mit gegenüber Isocyanaten reaktiven funktionellen Gruppen;
C) ein Treibmittel im überkritischen oder nahekritischen Zustand;
D) ein Polyisocyanat; und
E) ein Schichtsilikat.
